Europäisches Patentamt

European Patent Office

Office européen des brevets

(19)

(11) Publication number: **0 032 059**
**B1**

(12) **EUROPEAN PATENT SPECIFICATION**

(45) Date of publication of patent specification: **02.05.84**

(51) Int. Cl.³: **G 01 F 1/32**

(21) Application number: **80304741.4**

(22) Date of filing: **29.12.80**

(54) Vortex generating device.

(30) Priority: **28.12.79 US 108066**
**28.12.79 US 108196**
**05.12.80 PC T/US80/01622**

(43) Date of publication of application:
**15.07.81 Bulletin 81/28**

(45) Publication of the grant of the patent:
**02.05.84 Bulletin 84/18**

(84) Designated Contracting States:
**AT BE CH DE FR GB IT LI LU NL SE**

(56) References cited:
**FR - A - 1 228 750**
**US - A - 2 869 366**
**US - A - 3 564 915**
**US - A - 3 878 715**

(73) Proprietor: **J-TEC ASSOCIATES, INC.**
**317 Seventh Avenue, S.E.**
**Cedar Rapids, IA 52401 (US)**

(72) Inventor: **Johnson, Archie Gerhard**
**3909 Richmond Road**
**N.E. Cedar Rapids Iowa 52402 (US)**
Inventor: **Thorne, Glenn Allen**
**1218 18th Street**
**S.W., Cedar Rapids Iowa 52404 (US)**
Inventor: **Mahany, Richard J.**
**1341 Harold Drive**
**S.E., Cedar Rapids Iowa 52402 (US)**

(74) Representative: **Abnett, Richard Charles et al,**
**REDDIE & GROSE 16 Theobalds Road**
**London WC1X 8PL (GB)**

Courier Press, Leamington Spa, England.

## Vortex generating device

The present invention relates to a device for generating Karman vortices in a fluid stream, the device comprising a member disposed with side surfaces parallel to the direction of fluid flow said member having a leading and a trailing edge extending transverse to the direction of flow and means to form shedding corners for the generation of Karman vortices in a vortex street in a direction generally parallel to the direction of flow. It is well known that a fluctuation flow field composed of vortices is present in the wake of an object located in a relatively moving fluid. That is, if an object is passing through a fluid, or if the fluid is passing an object, a fluctuating flow field is developed which is composed of vortices which are alternately shed from the sides of the object. This fluctuating flow field is more commonly referred to as a Karman vortex street or trail. As is also known, the rate of generation of vortices in the wake of the object is related to the relative velocity between the object and the fluid stream.

An example of a vortex generating device of the type defined above is described in US—A—2 869 366. However in that specification the vortex-forming member is of a thickness such that an area of stagnation will be created upstream of the leading edge. Also in that specification, as in US—A—3 878 715 and US—A—3 564 915 the Karman vortices are formed at the downstream end of the vortex-forming member.

It is quite well known that a stagnation region develops on an upstream surface of an object immersed in a relatively moving fluid. The stagnation region constitutes a pressure zone near the upstream surface. The size of the stagnation region, and the magnitude of pressure associated therewith, depends on the configuration of the upstream surface. As the fluid moves relative to the object, the stagnation region tends to shift from side-to-side about the upstream surface, thereby creating pressure differentials which, in turn, effect flow-induced pressure gradients occurring downstream along surfaces of the object. Since the point of detachment of vortices from the immersed object and the timing of the detachment is dependent upon these pressure gradients, the magnitude of the pressure differentials associated with the shifting of the stagnation region is significant. The stagnation region created by the relatively blunt upstream surfaces of existing generators precipitate pressure differentials which cause non-uniformity in the detachment of vortices from the generator. Such non-uniformity results in erroneous measurement of the rate of vortex generation.

The geometrical configurations of existing vortex generators also produce large, turbulent wakes. The more turbulent the wake the greater the pressure drag exerted on the generator and the fluid. The pressure drag undesirably effects the velocity of the fluid and the vortices generated at a rate proportional thereto. Thus, the turbulence caused by existing vortex generators has detrimental impact upon the flow measurements.

Various types of existing flow meters, including flow meter for measuring velocity and/or mass of fluid flow, utilize vortex generating devices to obtain flow measurements. However, many of the vortex generating devices are unable to produce a vortex street of sufficient stability through a wide range of fluid flow rate. As a result, measurements indicate no vortices, or "misses", where vortices should have been detected. (Applicants recognize that vortex "stability" is dependent upon both the strength of formation of the vortices and the sensitivity of the means used for detection of the vortices. As used herein, however, "stability" pertains to the quality of vortices with reference to a given, or constant, detection means. That is, the production of sufficiently well-formed vortices in a sequence indicative of fluid flow.) The instability of the vortex streets produced by existing generators requires that vortex counting measurements be averaged over a sufficiently long time period in order to obtain an accurate indication of flow rate. The longer time interval required for averaging, results in a less accurate measurement for instantaneous flow.

Therefore, an object of embodiments of the invention hereinafter described is the provision of a device for generating more stable vortices.

In accordance with one aspect of the invention this is achieved in that the vortex-generating member is a narrow elongate plate, the leading edge is adapted so as to generate a boundary layer with essentially laminar flow near the leading edge and each of the shedding corners is formed by a leading aperture edge of an aperture or indentation intersecting at least one of the side surfaces of the plate, said aperture being close to the leading edge of the plate.

In accordance with another aspect of the invention the desired result is achieved in that the member is a narrow elongate plate, the leading edge is adapted so as to generate a boundary layer with essentially laminar flow near the leading edge and the shedding corners are formed by a wire member attached to the leading edge of the plate and disposed upstream of the leading edge along the axis of elongation of the plate.

An advantage of these embodiments is the reliable production of stable vortices with a reduction of wake-induced pressure differentials in the region of the vortex generating device.

A further advantage associated with the embodiments of the invention is the accurate measurement of the rate of generation of Karman vortices.

In the above regard, viscosity causes the fluid velocity to be zero at points along the surface of generator plates used in the preferred embodiments. However, at a very slight distance away from the surface of the plate the fluid velocity approaches a velocity generally characteristic of the fluid stream. Hence, a thin layer of fluid, known as the boundary-layer, containing large velocity gradients forms over the surface of the immersed plate.

The boundary layer initially starts at practically no thickness at a leading edge of the flat plate (defined with reference to the direction of fluid flow). Near the leading edge the flow of the boundary layer is essentially laminar. The boundary layer increases in thickness in a downstream direction as the viscous action increases due to increasing plate area. However, as the boundary layer becomes thicker and includes more fluid mass, instability results and flow within the layer breaks down, or "shears off", into turbulent flow. This change from a laminar to a turbulent layer is not an abrupt change, but rather occurs through a boundary-layer transition region in which both viscous and turbulent action are present. Eventually the viscosity effects in the transition region are finally replaced by turbulent effects, and a wholly turbulent boundary layer results.

The particular points along the surface of the flat plate where the transition region occurs are related to the Reynold's number. In this regard, the Reynold's number at any particular point downstream from the leading edge of the plate is dependent upon both the velocity of the fluid and the distance of that point from the leading edge. It has been observed that the transition region occurs for flat plates in a neighborhood approximating a Reynold's number of $10^5$. Thus, points along the surface of a flat plate having a Reynold's number in this neighborhood will generally be in the boundary-layer transition region.

The location of the boundary-layer transition region is not necessarily constant. That is, while a given flat plate may have a transition region associated with a first range of surface points for one velocity of fluid flow, the transition region may shift so as to become associated with a second range of surface points for a second velocity of fluid flow.

Regardless of where a boundary-layer transition region is located along the flat plate immersed in the stream of fluid flow, however, the transition region is attended by an erratic frictional drag. This frictional drag has a significant and, owing to its erratic nature, a generally unpredictable impact upon the fluid flow velocity in the transition region.

From the foregoing it is apparent that if a boundary-layer transition region were to occur near a sensing or shedding region of a device such as a vortex flowmeter, the erratic frictional drag would greatly disturb the rate and/or pattern of vortex formation with the result that measurements based thereon would be highly inaccurate. For example, if the structure of any particular vortex generating device were such that the boundary-layer transition region developed near a sensing region or shedding of the flowmeter for any fluid flow velocity of interest for a particular environment, the flow meter measurements for that fluid velocity would be inaccurate.

Therefore, another object of embodiments of this invention is to provide a vortex generating device capable of producing a stable vortex street throughout a range of fluid flow velocities of interest for a given environment. Such embodiments advantageously eliminate the occurrence of the boundary-layer transition region at significant locations along the generating device where they would otherwise occur for the range of fluid flow velocities of interest.

Brief Description of the Drawings

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.

Figs. 1A through 1F are side views of vortex generating devices according to various embodiments of the invention;

Figs. 2A through 2C are top views of vortex generating devices according to various embodiments of the invention;

Fig. 3A is a front view of a vortex generating device according to one embodiment of the invention;

Fig. 3B is a front view of the device of Fig. 3A inserted into a flow channel;

Figs. 4A and 4B are top and side views, respectively, of one embodiment of the invention;

Figs. 5A and 5B are top and front views of a vortex generating device according to an embodiment of the invention wherein a generating device is inserted into a flow channel between a transmitting means and a receiving means mounted in the channel;

Figs. 6A and 6B are top and side views, respectively, of a vortex generating device according to an embodiment of the invention having a sensor mounted on a trailing aperture edge; and,

Figs. 7A and 7B are top and front views, respectively, of a vortex generating device according to an embodiment of the invention having sensing means mounted on a downstream portion of the device.

Fig. 8 is a side view of a vortex generating device according to another aspect of the invention;

Fig. 9 is a sectional view of the embodiment of Fig. 9 taken along the line 9—9;

Fig. 10 is a side view of a vortex generating device according to another aspect of the invention; and

Fig. 11 is a sectional view of the embodiment of Fig. 10 taken along the line 11—11.

Detailed Description of the Drawings

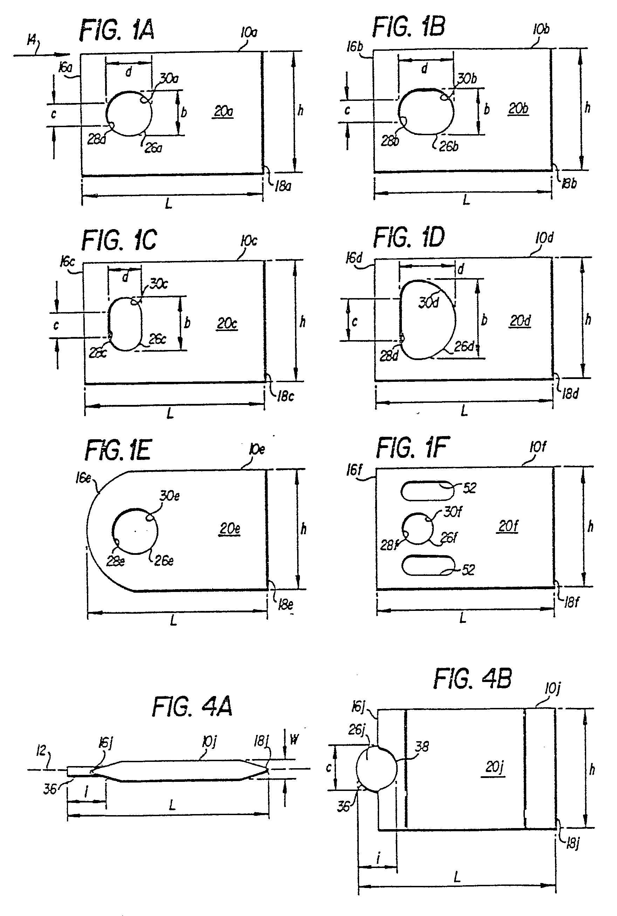

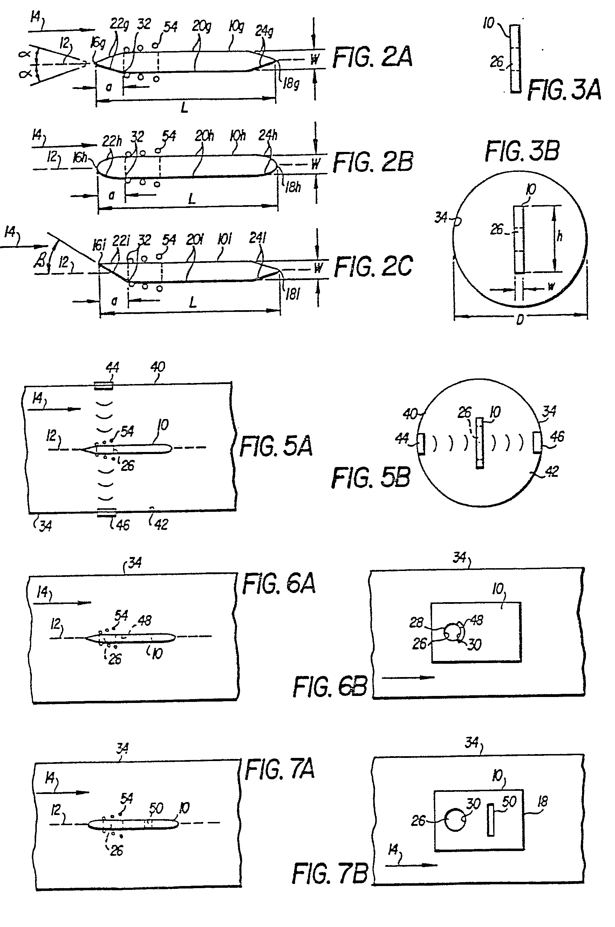

Figs. 1A through 1F illustrate vortex generating devices (such as generator plates 10a through 10f) according to various embodiments of the invention. Figs. 2A through 2C, in addition to illustrating a top view of further embodiments of the invention (comprising generator plates 10g, 10h, and 10i), also selectively illustrate an axis of elongation 12 associated with each generator plate 10 of the various embodiments disclosed herein. The axis of elongation 12, and hence each generator plate 10, is oriented parallel to the direction of fluid flow as indicated by arrow 14 (from left to right). It should be understood that, with the exception of Figs. 3A, 3B, and 5B, in each of the Figures the fluid flows in a direction from left to the right.

The generator plate 10 of the invention may be fabricated from any suitable material or combinations of material, including plastic or metal. While the generator plate 10 may be mounted in a free standing aerodynamic configuration, it should also be understood that each embodiment of the invention may also be incorporated into a bounded fluid stream, such as a pipe or the like.

With respect to the direction of flow, each generator plate has a leading edge 16 and a trailing edge 18. When projected onto the axis of elongation 12, the leading edge 16 of plate 10 is separated from the trailing edge 18 by a length dimension L. As seen in Figs. 2A through 2c, each generator plate 10 also has a width W which is essentially perpendicular to the axis of elongation 12. The generator plate 10 is a narrow, elongated member such that the ratio L:W is preferably in the range of 15:1 to 100:1. A L:W ratio in this range gives the generator device a streamlined shape which reduces the turbulence of the resultant wake and the pressure drop associated therewith.

Each generator plate 10 has two side surfaces 20 which extend from the leading edge 16 to the trailing edge 18. Although the side surfaces 20 are predominantly parallel to the axis of elongation 12 as viewed in Figs. 2A through 2C, the side surfaces 20 include leading portions 22 and trailing portions 24 (defined with respect to the direction of flow as indicated by arrow 14) which are not necessarily parallel to the axis 12. In this respect, Figs. 2A, 2B, and 2C each show separate embodiments having different configurations for the leading portions 22 of the side surfaces 20.

In the embodiment of Fig. 2A the leading portions 22g of side surfaces 20g are essentially straight lines as viewed from above and intersect the axis of elongation 12 at an angle alpha $\alpha$ preferably in the range from 5° to 30°, thereby forming the leading edge 16g.

In the embodiment of Fig. 2B the leading portions 22h of the side surfaces 20h gradually taper inwardly to form the leading edge 16g.

In the embodiment of Fig. 2C a leading portion 22i remains substantially parallel to the axis of elongation 12 while leading portion 22i' intersects leading portion 22i at an angle beta $\beta$ which is preferably in the range from 5° to 30°.

A height dimension h which is orthogonal to both the length dimension L and the width dimension W is illustrated for each of the embodiments of Fig. 1A through 1F. In this respect, the leading edge 16 of each generator plate 10 may have a leading edge 16 which is essentially straight with respect to the height dimension h or, as illustrated in Fig. 1E, may have a leading edge 16e which is curved with respect to the height h.

The generator plates 10 of the different embodiments of the invention have a shedding section comprising an aperture 26 which intersects the side surfaces 20 and extend into the plate 10 along the width dimension W. In this regard, the aperture 26 may be a suitable indentation on the side surface 20 or the aperture 26 may extend completely through the plate 10.

Although the aperture 26 may take on numerous geometrical shapes as hereinafter exemplified with reference to the embodiments of Fig. 1A through 1D, the aperture 26 of each embodiment has a leading aperture edge 28 and a trailing aperture edge 30 with respect to the direction of flow indicated by arrow 14. The leading aperture edges 28 intersect the side surfaces 20 of the plate 10 to form shedding corners 32 which are preferably sharp as seen from above in Figs. 2A through 2C. As seen from the side in Figs. 1A through 1D, however, the leading aperture edges 28 are preferably a continuous curve without any sharp discontinuities.

As indicated above, the aperture 26 may take on several exemplary geometrical configurations as illustrated in Figs. 1A through 1D. The embodiment of Fig. 1A shows a circular aperture 26a; the embodiment of Fig. 1B shows a substantially elliptical aperture 26b having its major axial parallel to the axis of elongation 12; the embodiment of Fig. 1C illustrates a substantially elliptical aperture 26c having a major axis perpendicular to the axis of elongation 12; and, the embodiment of Fig. 1B illustrates a substantially "D"-shaped aperture 26d with a relatively straight leading edge 28d smoothly tapered at its extremes for intersecting the substantially arcuate trailing aperture edge 30d.

Figs. 1A through 1d show a distance d which is the greatest distance from the leading aperture edge 28 to the trailing aperture edge 30. That is, distance d is the distance from the most upstream portion of edge 28 to most down-

stream portion of edge 30. With respect to the width W of the plate 10, a ratio d:W is preferably in the range of 5:1 to 30:1.

In each of the embodiments of Figs. 1A through 1D the shedding corners 32 effectively extend along the leading aperture edge 28 for only a portion thereof, such that the effective shedding length of the leading aperture edge 28 (as projected on the height dimension h) is a length c. Although length c varies with each embodiment. it is believed that in each embodiment c should be less than the length of the projection of the leading aperture edge 28 on the height dimension h (denoted as b). When the portions of leading aperture edge 28 are not included within the distance c are smoothly tapered as illustrated, these portions of the leading aperture edge 28 advantageously tend to minimize the turbulence. With respect to the width W of the plate 10, a ratio c:W is preferably in the range of 2:1 to 9:1.

The distance from the furthest upstream point of the leading aperture edge 28 must be sufficiently downstream from the leading edge 16 of plate 20 in order to accommodate the leading portions 22 of the side surfaces 20. In this respect, the leading portions 22 have a length a (as projected on the axis of elongation 12) such that the ratio of the length a to the width W (a:W) should preferably be less than 5:1 and more preferably less than 3:1 to minimize variations caused by kinematic viscosity effects (such as changing pressure, temperature, and humidity in the fluid).

As previously mentioned, any of the embodiments of the invention described herein may be utilized as a free standing aerodynamical configuration (as illustrated in Fig. 3A) or may be incorporated into a flow channel (such as a pipe 34 as seen in the front cross-sectional view of Fig. 3B). With particular regard to the latter, although the flow channel 34 of Fig. 3B is shown as a pipe with a circular cross-section of diameter D, it should be understood that many geometrical configurations may be used for the channel 34. The generator plate 10 of Fig. 3B has a channel blockage area equal to the product of its height h times the width W. Unlike existing vortex generators employed in comparable channel flow meters, the generator plate 10 of the various embodiments of the invention may operate while blocking less than 1/5 of the cross-sectional area of the channel 34, and may preferably operate while blocking leas than 1/15 of the channel 34. Yet, the generator plate 10 of the various embodiments of the invention produces reliable stable vortices through a wide range of flow velocities.

As mentioned hereinbefore, although the side surfaces 20 of the generator plate are essentially parallel to the axis of elongation 12, a trailing portion 24 of the side surfaces 20 tapers inwardly to the trailing edge 18 of the plate 10. In this respect, the taper may be very gradual as shown with respect to trailing portions 24h of Fig. 2B; or, the trailing portions may be sharp as illustrated by trailing portions 24g of Fig. 2A.

Figs. 4A and 4b illustrate an additional embodiment of the invention wherein a generator plate 10j has side surfaces 20j spanning a leading edge 16j and a trailing edge 18j. A generator member 36, preferably a wire, is mounted on the leading edge 16j of generator plate 10j so as to extend upstream along the axis of elongation 12. As shown in Fig. 4B, the member 36 is preferably arcuate so as to be attached to leading edge 16j at two points. However, it should be understood that member 36 may assume various geometrical configurations, including that of a substantially linear segment. A greatest distance i from the generator member 36 to the leading edge 16j as projected on the axis of elongation 12 is such that the ratio I:W is in the range of 5:1 to 30:1.

When the leading edge 16j is formed with a dimple 38 as shown in Fig. 4B, the arcuate member 36 and dimple 38 circumscribe an aperture 26j of which the generator member 36 is a leading aperture edge and the dimple 38 is a trailing aperture edge.

In many respects the embodiments illustrated by Figs. 4A and 4B are similar to the embodiments previously described. For example, the dimensional ratios discussed above are applicable to the Fig. 4A and 4B embodiments when considering the length dimension L to extend from the furthermost upstream portion of the generator member 36 to the trailing edge 18j. Also, for example, the leading edges 16j and the trailing edges 18j may be tapered in any of the above-described manners.

The embodiments of the invention may conveniently employ various types of sensors positioned in numerous arrangements. For example, Figs. 5A and 5B illustrate the generator plate 10 positioned in a flow channel 34 such that the axis of elongation 12 of the generator plate 10 is parallel to the direction of the fluid flow as indicated by arrow 14. Although Fig. 5B illustrates flow channel 34 having a circular cross-section, it should be understood that the flow channel 34 may be any appropriate channel.

Flow channel 34 of Figs. 5A and 5B has a first channel wall 40 and a second channel wall 42 which are both parallel to the direction of fluid flow and which face each other. Mounted in the first channel wall 40 is a transmitting transducer 44; mounted in the second channel wall 42 is a receiving transducer 46. The transducers 44, 46 are mounted on the opposing channel walls such that a signal travelling between the transducers 44, 46 would pass through the aperture 26 of the generator plate 10. The transmitting transducer 44 and the receiving transducer 46 are connected to suitable electrical circuitry for determining the relative velocity between the fluid stream and the generator plate 10.

Fig. 6A and 6B illustrate a further embodiment of the invention wherein a sensor 48 is mounted on the trailing aperture edge 30 of the generator plate 10. The embodiments of Figs. 7A and 7B illustrate the mounting of a sensor 50 on a portion of the generator plate 10 between the trailing aperture edge 30 and the trailing edge 18 of the generator plate 10.

Various sensor devices may be used for the sensors of the Fig. 6 and 7 embodiments. For example, the sensors 48 and/or 50 may be hot-wire devices or capacitance devices. While the generator plates 10 of the Fig. 6 and 7 embodiments are illustrated as positioned within a flow channel 34, it should again be understood that these embodiments may also be free-standing aerodynamical configurations.

The embodiment of Fig. 1F comprises a generator plate 10f which may combine one or more of the features of the above-described embodiments. In addition, the Fig. 1F embodiment has surface discontinuities 52 on each side surface 20f. While the surface discontinuities 52 may take various forms, such as raised or elevated portions, the Fig. 1F illustration depicts the surface discontinuities as holes extending through the width W of plate 10f.

In operation, each of the generator plates 10 according to the different embodiments of the invention is oriented so that its axis of elongation 12 is parallel to the direction of fluid flow as indicated by arrow 14. As the fluid flows, the essentially sharp leading edge 16 of the generator plate 10 configured according to either of the Fig. 2A, Fig. 2B, or 2C, embodiments prevents the formation of a sizeable stagnation area on the upstream surface of the plate 10. Hence, the pressure changes associated with the shifting of the stagnation region is reduced and the effect thereof on the pressure gradients influencing vortex detachment is minimized.

After the fluid has flowed around the leading portions 22 of side surfaces 20 in a laminar fashion, vortices (labeled 54 in the various figures) detach from the generator plate 10 at the shedding corners 32 which lie along the leading aperture edge 28 of the aperture 26. The preferably sharp corners 32 of the leading aperture edge 28 permit the formation of well-formed, stable vortices. The vortices detach from the leading aperture edge 28 along a shedding height which, when projected on a plane perpendicular to the side surfaces 20 of the plate 10, has a length c which is preferably less than the height b of the aperture 26. Since the extremities of the leading aperture edge 28 are essentially continuous curves without sharp discontinuities, minimum turbulence is produced at the extremities and vortices are generated only along the portion of the leading aperture edge 28 corresponding to the distance c.

After the vortices detach from the shedding corners 32, one or more sensors positioned in either of the above-described configurations detect the rate of generation of the vortices. In the embodiments of Fig. 5A and Fig. 5B, for example, the transmitting transducer 44 directs a signal, such as a sonic signal, towards vortices 54 in the vicinity of the aperture 26. The receiving transducer 46 receives a signal modulated by the vortices and uses the signal as an indication of the relative velocity of the fluid. The various embodiments of the invention may be utilized with numerous types of sensors in the manners hereinbefore described, including sensors for measurements of velocity and/or mass flow. In this respect, the sensors mounted on the generator plate 10 may be sensors for determining parameters other than the rate of vortex generation.

The narrow, elongate shape of the generator plate 10 gradually provides a laminar flow in the region near the shedding corners 32. The portion of generator plate 10 extending from the trailing aperture edge 30 to the trailing edge 18 acts to separate the two sides of the vortex street thereby preventing interaction of the vortices following detachment. It is thought that the side surfaces 20 downstream from the trailing aperture edge 30 dissipate the vortices by viscous action, thus reducing the effect of the vortex street on the whole flow system. This effect is believed to be responsible for the reduced pressure drop of the generator plate 10 as compared to prior art shedding objects.

The trailing portions 24 of the surfaces 20 are tapered to reduce the magnitude of turbulent shedding from the rear of the generator plate 10. This has the practical effect of reducing the pressure drop and eliminating audible noises (such as whistles) which would normally be associated with a blunt termination.

The operation of the Fig. 4A and 4B embodiments closely resembles that described above except that the generator member 36 is the furthest upstream portion of the generator plate 10j. Accordingly, the narrow generator element 36 does not produce a sizable stagnation region and promptly sheds vortices, thereby forming a vortex street. Again, sensors may be mounted in a variety of configurations, including a variation of Fig. 4B wherein generator plate 10j may be mounted in a flow channel (in the manner of the embodiment of Fig. 5A and 5B) so that a signal may be transmitted through the vortex street in the vicinity of the aperture 26j. Also, a sensor may be mounted on leading edge 16j.

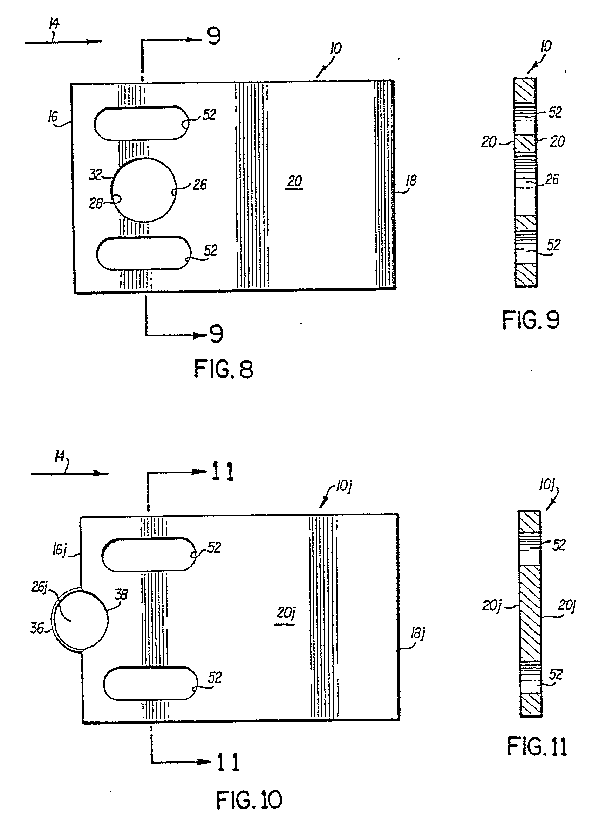

In the Fig. 8 structure the side surfaces 20 of the generator plate 10 are provided with at least one surface disruption or surface discontinuity 52. While the surface disruption 52 may take various forms, such as protuberance (that is, a raised or elevated portion) or a circular hole, the Fig. 8 illustration depicts the surface disruption as a radiused slot in the side surface 20. In the particular configuration illustrated, the radiused slot is formed in side surface 20 so that its greater dimension is parallel to the direction of fluid flow. For one exemplary configuration of the Fig. 8 structure, the radiused slot has a 0.5 inch (1.27 cm) height dimension and 1.5 inch (3.81 cm) length dimension relative to an aperture 26 of 1.0 inch (2.54 cm) diameter.

In the above regard, a surface disruption such as a hole or slot may be an indentation in the side surface 20 or may, as illustrated in Fig. 9, extend entirely through the width of the plate 10. Further, the surface disruptions may preferably be arranged symmetrically with respect to the aperture 26.

The Fig. 10 device resembles the Figs. 4A and 4B structure. Therein the generator plate 10j also has provided on its side surface 20j at least one surface disruption, or surface discontinuity 52. As with the Fig. 8 device discussed above, the surface disruption 52 may take several forms. In this regard, Fig. 10 also depicts a surface disruption as a radiused slot.

In operation, a boundary layer develops along side surfaces 20 of the generator plate 10 from the leading edge 16 to the trailing edge 18.

Within the surface disruption 52, and depending on the Reynold's number associated with each point along the side surface 20, the boundary layer would be either laminar, transitional, or turbulent. A wholly laminar or wholly turbulent boundary layer does not deleteriously affect the vortex street created by the shedding corners 32 or the generator member 36. However, if a boundary-layer transition region occurs along the side surface 20 the aforedescribed frictional drag has a deleterious and unpredictable impact upon the fluid flow velocity.

The surface discontinuities or surface disruptions 52 on the side surfaces 20 of the generator plate 10 generate boundary-layer turbulence which eliminates the formation of a boundary-layer transition region and permits the velocity profile of the flow to develop without further disturbances. With the provision of the surface discontinuities 52 the boundary layer does not shear off from the plate so as to effect the vortex shedding sections of the respective embodiments.

Incorporation of surface discontinuities such as 52 results in a vortex generating device capable or producing a stable vortex street throughout a range of fluid flow velocities of interest for the given flowmeter environment. Thus, the measurements based on the generated vortices are highly accurate through a broad range of fluid flow velocities.

## Claims

1. A device for generating Karman vortices in a fluid stream, the device comprising a member disposed with side surfaces parallel to the direction of fluid flow, said member having a leading and trailing edge extending transverse to the direction of flow and means to form shedding corners for the generation of Karman vortices in a vortex street in a direction generally parallel to the direction of flow characterised in that the member is a narrow, elongate plate (10), the leading edge (16) is adapted so as to generate a boundary layer with essentially laminar flow near the leading edge (16) and each of the shedding corners (32) is formed by a leading aperture edge (28) of an aperture (26) or indentation intersecting at least one of the side surfaces (20) of the plate (10), said aperture (26) being close to the leading edge (16) of the plate (10).

2. A device as claimed in claim 1 in which the distance (d) from the leading aperture edge (28) to a respective trailing edge (30) of the aperture (26) along the direction of flow is from 5 to 30 times the thickness (W) of the plate.

3. A device as claimed in claim 1 or 2 in which the distance (a) from the leading edge (16) of the plate (10) to the leading aperture edge (28) is less than five times and preferably less than three times the thickness (W) of the plate (10).

4. A device as claimed in any of claims 1 to 3 in which the leading aperture edge (28) is essentially a continuous curve in a plane containing one side surface of the plate.

5. A device for generating Karman vortices in a fluid stream, the device comprising a member disposed with side surfaces parallel to the direction of fluid flow said member having a leading and trailing edge extending transverse to the direction of flow and means to form shedding corners for the generation of Karman vortices in a vortex street in a direction generally parallel to the direction of flow characterised in that the member is a narrow, elongate plate (10) the leading edge (16) is adapted so as to generate a boundary layer with essentially laminar flow near the leading edge (16) and the shedding corners (32) are formed by a wire member (36) attached to the leading edge (16) of the plate (10) and disposed upstream of the leading edge (16) along the axis of elongation (12) of the plate (10).

6. A device as claimed in claim 5 wherein the wire member (36) is attached to the leading edge (16) at two points and is generally arcuate to define with the leading edge (16) the aperture (26).

7. A device as claimed in claim 5 or 6 in which the distance (i) from the wire member (36) to the leading edge (16) along the direction of flow is within the range of from 5 to 30 times the thickness (W) of the plate (10).

8. A device as claimed in any of claims 1 to 7 in which the length (L) of the plate (10) in the direction of flow is between fifteen and one hundred times the thickness (W) of the plate (10).

9. A device as claimed in any of claims 1 to 8 in which the side surfaces (20) of the plate (10) taper gradually towards the leading edge (16) and intersect to form the leading edge (16).

10. A device as claimed in any of the preceding claims in which the shedding corners (32) have an effective vortex-generating length (c) projected on a plane perpendicular to the flow direction of between 2 and 9 times the thickness (W) of the plate.

11. A device as claimed in any of the preceding claims in which the side surfaces (20) of the plate (10) taper towards the trailing edge (18) of the plate (10).

12. A device as claimed in any of the preceding claims in which each of said side surfaces (20) has surface disruptions (52) symmetrically disposed with reference to the shedding corners (32) for generating boundary layer turbulence in the fluid flow.

13. A device as claimed in any of the preceding claims in which the plate (10) is disposed in a flow channel (34) so as to block less than one fifth and preferably less than one fifteenth of the diameter (D) of the flow channel (34).

**Revendications**

1. Dispositif générateur de tourbillons de Karman dans un courant de fluide, le dispositif comprenant un organe disposé avec des surfaces latérales parallèles à la direction d'écoulement du fluide, ledit organe ayant un bord antérieur et un bord postérieur placés transversalement à la direction d'écoulement et un dispositif destiné à former des coins d'arrachement assurant la création de tourbillons de Karman dans un chemin de tourbillons en direction générale parallèle à la direction d'écoulement, caractérisé en ce que l'organe est une plaque étroite et allongée (10), le bord antérieur (16) est adapté de manière qu'il crée une couche limite ayant un écoulement essentiellement laminaire près du bord antérieur (16), et chacun des coins d'arrachement (32) est formé par un bord antérieur (28) d'une ouverture (26) ou cavité recoupant au moins l'une des surfaces latérales (20) de la plaque (10), l'ouverture (26) étant proche du bord antérieur (16) de la plaque (10).

2. Dispositif selon la revendication 1, dans lequel la distance (b) comprise entre le bord antérieur (28) de l'ouverture et un bord postérieur (30) correspondant de l'ouverture (26) dans la direction d'écoulement est comprise entre 5 et 30 fois l'épaisseur (W) de la plaque.

3. Dispositif selon l'une des revendications 1 et 2, dans lequel la distance (a) comprise entre le bord antérieur (16) de la plaque (10) et le bord postérieur (28) de l'ouverture est inférieure à cinq fois et de préférence à trois fois l'épaisseur (W) de la plaque (10).

4. Dispositif selon l'une quelconque des revendications 1 à 3, dans lequel le bord antérieur (28) de l'ouverture est essentiellement une courbe continue placée dans un plan contenant une surface latérale de la plaque.

5. Dispositif générateur de tourbillons de Karman dans un courant de fluide, le dispositif comprenant un organe disposé de manière que ses surfaces latérales soient parallèles à la direction d'écoulement du fluide, ledit organe ayant un bord antérieur et un bord postérieur placés transversalement à la direction d'écoulement, et un dispositif destiné à former des coins d'arrachement assurant la création de tourbillons de Karman dans un chemin de tourbillons en direction générale parallèle à la direction d'écoulement, caractérisé en ce que l'organe est une plaque étroite et allongée (10) dont le bord antérieur (16) est adapté de manière qu'il crée une couche limite à écoulement essentiellement laminaire près du bord antérieur (16), et les coins d'arrachement (32) sont formés par un organe (36) en forme de fil fixé au bord antérieur (16) de la plaque (10) et disposé en amont de bord antérieur (16) le long de l'axe d'allongement (12) de la plaque (10).

6. Dispositif selon la revendication 5, dans lequel l'organe en forme de fil (36) est fixé au bord antérieur (16) en deux points et a une forme générale courbe afin qu'il délimite, avec le bord antérieur (16), l'ouverture (26).

7. Dispositif selon l'une des revendications 5 et 6, dans lequel la distance (i) comprise entre l'organe en forme de fil (36) et le bord antérieur (16) dans la direction d'écoulement est comprise entre 5 et 30 fois l'épaisseur (W) de la plaque (10).

8. Dispositif selon l'une quelconque des revendications 1 à 7, dans lequel la longueur (L) de la plaque (10) dans la direction d'écoulement est comprise entre 15 et 100 fois l'épaisseur (W) de la plaque (10).

9. Dispositif selon l'une quelconque des revendications 1 à 8, dans lequel les surfaces latérales (20) de la plaque (10) se rapprochent progressivement vers le bord antérieur (16) et se recoupent en formant le bord antérieur (16).

10. Dispositif selon l'une quelconque des revendications précédentes, dans lequel les coins d'arrachement (32) ont une longueur efficace (c) de création de tourbillons qui, projetée sur un plan perpendiculaire à la direction d'écoulement, est comprise entre 2 et 9 fois l'épaisseur (W) de la plaque.

11. Dispositif selon l'une quelconque des revendications précédentes, dans lequel les surfaces latérales (20) de la plaque (10) se rapprochent vers le bord postérieur (18) de la plaque (10).

12. Dispositif selon l'une quelconque des revendications précédentes, dans lequel chaque surface latérale (20) a des discontinuitiés de surface (52) placées symétriquement par rapport aux coins d'arrachement (32) et destinées à créer une turbulence dans la couche limite du courant de fluide.

13. Dispositif selon l'une quelconque des revendications précédentes, dans lequel la plaque (10) est disposée dans un canal (34) de circulation afin qu'elle obstrue moins du cinquième et de préférence moins du quinzième du diamètre (D) du canal (34) de circulation.

**Patentansprüche**

1. Einrichtung zur Erzeugung Karman'scher Wirbel in einem Strömungsmittelstrom, mit einem Bauteil, welches so angeordnet ist, daß Seitenflächen des Bauteils parallel zur Strömungsrichtung liegen und welches eine vordere und eine hintere Kante, die sich quer zur Strömungsrichtung erstrecken sowie Mittel Aufweist, um Ablösungskanten für die Erzeugung von Karman'schen Wirbeln in einer Wirbelstraße in einer Richtung im wesentlichen parallel zur Strömungsrichtung zu bilden, dadurch gekennzeichnet, daß das Bauteil eine schmale, langgestreckte Platte (10) ist, daß die vordere Kante (16) so ausgebildet ist, daß eine Grenzschicht mit im wesentlichen laminarer Strömung nahe der vorderen Kante (16) erzeugt wird und daß jede der Ablösungskanten (32) von einer vorderen Öffnungskante (28) einer Öffnung (26) oder einer Vertiefung gebildet wird, die mindestens eine der Seitenflächen (20) der Platte (10) unterbricht, wobei die Öffnung (26) nahe an der vorderen Kante (16) der Platte (10) gelegen ist.

2. Einrichtung nach Anspruch 1, bei welcher der Abstand (d) von der vorderen Öffnungskante (28) zu einer jeweiligen hinteren Kante (30) der Öffnung (26) in Richtung der Strömung das Fünffache bis Dreißigfache der Dicke (W) der Platte beträgt.

3. Einrichtung nach Anspruch 1 oder 2, bei welcher der Abstand (a) der vorderen Kante (16) der Platte (10) von der vorderen Öffnungskante (28) weniger als das Fünffache und vorzugsweise weniger als das Dreifache der Dicke (W) der Platte (10) ist.

4. Einrichtung nach einem der Ansprüche 1 bis 3, bei welcher die vordere Öffnungskante (28) in einer eine Seitenfläche der Platte enthaltenden Ebene eine kontinuierliche Kurve ist.

5. Einrichtung zur Erzeugung Karman'scher Wirbel in einem Strömungsmittelstrom, mit einem Bauteil, welches so angeordnet ist, daß Seitenflächen des Bauteils parallel zur Strömungsrichtung liegen und welches eine vordere und eine hintere Kante, die sich quer zur Strömungsrichtung erstrecken sowie Mittel aufweist, um Ablösungskanten für die Erzeugung von Karman'schen Wirbeln in einer Wirbelstraße in einer Richtung im wesentlichen parallel zur Strömungsrichtung zu bilden, dadurch gekennzeichnet, daß das Bauteil eine schmale, langgestreckte Platte (10) ist, daß die vordere Kante (16) so ausgebildet ist, daß eine Grenzschicht mit im wesentlichen laminarer Strömung nahe der vorderen Kante (16) erzeugt wird und daß die Ablösungskanten (32) durch ein drahtförmiges Element (36) gebildet werden, das an der vorderen Kante (16) der Platte (10) befestigt ist und stromauf von der vorderen kante in Richtung der Längsachse (12) der platte (10) angeordnet ist.

6. Einrichtung nach Anspruch 5, bei welcher das drahtförmige Element (36) mit der vorderen Kante (16) an zwei Punkten verbunden ist und im wesentlichen bogenförmig ist, so daß es zusammen mit der vorderen Kante (16) die Öffnung (26) begrenzt.

7. Einrichtung nach Anspruch 5 oder 6, bei welchem der Abstand (i) von dem drahtförmigen Element (36) au der vorderen Kante (16) in Richtung der Strömung im Bereich von dem Fünffachen bis Dreißigfachen der Dicke (W) der Platte (10) liegt.

8. Einrichtung nach einem der Ansprüche 1 bis 7, bei welcher die Länge (L) der Platte (10) in Richtung der Strömung zwischen dem Fünfzehnfachen und dem Einhundertfachen der Dicke (W) der Platte (10) mißt.

9. Einrichtung nach einem der Ansprüche 1 bis 8, bei welcher die Seitenflächen (20) der Platte (10) zur vorderen Kante (16) hin allmählich aufeinander zulaufen und sich zur Bildung der vorderen Kante (16) treffen.

10. Einrichtung nach einem der vorhergehenden Ansprüche, bei welcher die Ablösungskanten (32) ein wirksame wirbelerzeugenden Länge (c), projiziert in eine Ebene senkrecht zur Strömungsrichtung, von zwischen dem Zweifachen un dem Neunfachen der Dicke (W) der Platte aufweisen.

11. Einrichtung nach einem der vorhergehenden Ansprüche, bei welcher die Seitenflächen (20) der Platte (10) zur hinteren Kante (18) der Platte (10) hin aufeinander zulaufen.

12. Einrichtung nach einem der vorhergehenden Ansprüche, bei welche jede der Seitenflächen (20) Oberflächenunterbrechungen (52) besitzt, die symmetrisch mit Bezug aud die Ablösungskanten (32) gelegen sind, um Grenzschichtturbulenzen im Strömungsmittelstrom zu erzeugen.

13. Einrichtung nach einem der vorhergehenden Ansprüche, bei welcher die Platte (10) in einem Strömungskanal (34) so angeordnet ist, daß weniger als ein Fünftel und vorzugweise weniger als ein Fünfzehntel des Durchmesser (D) des Strömungskanales (34) verlegt ist.

FIG. 1A

FIG. 1B

FIG. 1C

FIG. 1D

FIG. 1E

FIG. 1F

FIG. 4A

FIG. 4B

FIG. 2A

FIG. 2B

FIG. 2C

FIG. 3A

FIG. 3B

FIG. 5A

FIG. 5B

FIG. 6A

FIG. 6B

FIG. 7A

FIG. 7B

FIG. 8

FIG. 9

FIG. 10

FIG. 11